# EUROPÄISCHE PATENTSCHRIFT

(11) **EP 1 472 195 B1**
(45) Veröffentlichungstag und Bekanntmachung des Hinweises auf die Patenterteilung: **15.07.2009**
(21) Anmeldenummer: 03704480.7
(22) Anmeldetag: 28.01.2003
(51) Int. Cl.: C03C 17/34, H01J 61/35

(54) **VERFAHREN ZUM BESCHICHTEN EINES QUARZBRENNERS EINER HID-LAMPE**
METHOD FOR COATING THE QUARTZ BURNER OF AN HID LAMP
PROCEDE POUR APPLIQUER UN REVETEMENT SUR UN BRULEUR A QUARTZ D'UNE LAMPE A DECHARGE A HAUTE INTENSITE

(30) Priorität: 02.02.2002 DE 10204363
(43) Veröffentlichungstag der Anmeldung: 03.11.2004
(73) Patentinhaber: Schott AG, 55122 Mainz (DE)
(72) Erfinder: MÖHL, Wolfgang, 67550 Worms (DE); BEWIG, Lars, 37581 Bad Gandersheim (DE); KÜPPER, Thomas, 37581 Bad Gandersheim (DE); MARING, Wolfram, 22337 Hamburg (DE); MOELLE, Christoph, 37581 Bad Gandersheim (DE)
(74) Vertreter: Fuchs
(86) Internationale Anmeldenummer: PCT/EP2003/000827
(87) Internationale Veröffentlichungsnummer: WO 2003/066540

(56) Entgegenhaltungen:
- EP-A- 1 158 566
- DE-A- 3 830 089
- DE-A- 4 432 315
- DE-A- 19 962 144

## Beschreibung

Die Erfindung bezieht sich auf ein Verfahren zum Beschichten eines Quarzbrenners einer HID-Lampe mit einem UV-reflektierenden Schichtsystem.

Für Beleuchtungszwecke mit hohen Beleuchtungsstärken werden Hochintensitäts- oder Hochleistungs-Gasentladungslampen, sogenannte HID-Lampen (High Intensity-Discharge-Lampen) verwendet, die einen Plasma-Quarzbrenner als Leuchtmittel, der innerhalb eines Hüllkolbens angeordnet ist, besitzen.

Eine zentrale Rolle bei der Lichterzeugung im Plasma des Brenners von HID-Lampen spielen die UV-Photonen, die die Atome des Plasma zur Lichterzeugung im sichtbaren Bereich anregen. Bei den bekannten HID-Lampen verlassen jedoch große UV-Photonenflüsse den Quarzbrenner ungenutzt. Dies bedeutet somit eine Verschlechterung des Energiewirkungsgrades der HID-Lampe.

Das ungenutzte Entweichen der UV-Photonenflüsse könnte signifikant verringert werden, wenn der Quarzbrenner mit einem UV-reflektierenden Schichtsystem versehen werden kann, das jedoch für die Lebensdauer der Lampe beständig sein muß. Wegen des aggressiven Plasmamediums im Quarzbrenner und den hohen betrieblichen Brennertemperaturen ist dies jedoch nicht ohne weiteres zu gewährleisten.

UV-reflektierende Schichtsysteme auf unterschiedlichen Substraten sind aus verschiedenen Veröffentlichungen bekannt geworden, wie später noch im einzelnen beschrieben werden wird. Diese bekannten Schichtsysteme haben bei Quarzbrennern für HID-Lampen nicht den gewünschten Erfolg erzielt. Zum einen hat sich das Beschichten selbst als schwierig erwiesen. Zum anderen wurde keine nennenswerte Verbesserung des Energiehaushaltes erreicht.

Der Erfindung liegt die Aufgabe zugrunde, ein Verfahren zum Beschichten eines Quarzbrenners einer HID-Lampe mit einem UV-reflektierenden Schichtsystem zu schaffen, das mit relativ einfachen Mitteln auf den Quarzbrenner aufbringbar ist, eine ausreichende, angepasste Lebensdauer hat und eine nennenswerte Verbesserung des Energiehaushaltes bewirkt.

Die Lösung dieser Aufgabe gelingt gemäß der Erfindung durch alternierendes Aufbringen von amorphen Dünnschichten aus mindestens Titanoxid und Siliziumoxid in der allgemeinen Stöchiometrie TiO_{y} und SiOₓ mittels eines PICVD-Verfahrens mit hoher Leistungsdichte und erhöhten Substrat-Temperaturen im Bereich von 100° - 400° C mit kleinen Aufwuchsraten im Bereich von 1 nm/sec - 100 nm/sec zu einem Interferenz-Schichtsystem mit einer Dicke von unter 1200 nm und einer Minimierung des UV-wirksamen Fehlstellenanteiles.

Der erfindungsgemäße Interferenz-Schichtaufbau für das UV-reflektierende Schichtsystem aus amorphen Titan- bzw. Siliziumdioxid-Schichten, den Standardelementen, mit kleinen Aufwuchsraten bei Temperaturen im Bereich von 100° - 400° C gewährleistet für die Lebensdauer der HID-Lampe, dass im signifikanten Umfang UV-Photonen, die ansonsten aus dem Quarzbrenner entweichen würden, durch Reflexion in das Plasma im Quarzbrenner zur weiteren Lichterzeugung im sichtbaren Bereich zurückgewonnen werden können und damit den Energiehaushalt der HID-Lampe signifikant verbessern. Es hat sich gezeigt, dass es bei einer Wellenlänge von 360 nm durch die erfindungsgemäße Interferenz-Beschichtung zu einer UV-Reflexion von 70 % kommt.

Das eingesetzte PICVD-Verfahren, das grundsätzlich hinreichend an sich bekannt ist und daher hier nicht näher erläutert werden muß, macht es durch besondere Prozessparameter möglich, auf relativ einfache Weise die Interferenz-Beschichtung sowohl im Innern des Quarzbrenners als auch auf dem Quarzbrenner abzuscheiden.

Bei einer Innenbeschichtung hat sich dabei auch in überraschender Weise gezeigt, dass diese gegenüber dem aggresiven Plasmamedium inert ist.

Die erfindungsgemäße Beschichtung kommt überraschenderweise mit den Standardelementen Si/Ti ohne Dotierelemente wie C, H, N und ohne Heteroelemente wie Al, Nb, Ta aus.

Die Verwendung des PICVD-Verfahrens ermöglicht auch den Einsatz auf entsprechenden Mehrplatzanlagen, was mit Vorteil insbesondere einen hohen Durchsatz bei der Beschichtung der Quarzbrenner zur Folge hat.

Die Interferenzbeschichtung weist eine Dicke < 1200 nm, bevorzugt <500 nm, auf. Derartige Schichten besitzen eine hohe Flexibilität. Des weiteren können bei derartig dünnen Schichten insbesondere auch intrinsische Spannungen, die zu einem Abplatzen der Schicht führen könnten, vermieden werden. Ein typischer Schichtaufbau weist ca. 50 alternierende Einzelschichten von Ti/Si-Oxid auf, mit Schichtdicken zwischen 5 nm bis 100 nm, wobei die Dicken nicht unbedingt streng gleich groß verteilt sein müssen, sondern auch Häufungen kleiner Schichtdicken vorkommen können; dies ist designabhängig. Die Schichtdickenverteilung im Schichtpaket stellt daher ein Mix dar, in dem die Dicken 5 nm -100 nm gemischt vorkommen können, dass z.B. extrem dünne Schichten gehäuft vorkommen.

Der sehr geringe erzielbare Fehlstellenanteil gewährleistet eine sehr geringe UV-Absorption in der Interferenzbeschichtung. Gemeint sind hierbei strukturelle Fehlstellen, d. h. ein sehr geringer Einbau fremder Elemente. Zum besseren Verständnis der Erfindung wird noch auf folgendes hingewiesen:
In einem Quarz-Brenner für HID-Lampen wird in einer entsprechenden Glas-Umhüllung, dem Entladungsgefäß, in einem Gasgemisch aus Metallhalogeniden und Startgas, beispielsweise Xenon, mit DC/AC bei 100 - 300 Hz ein Plasma gezündet. UV-Photonen führen dabei zu Elektronenübergängen in den Atomhüllen der Gase und emittieren:
   a. Sichtbares Licht mit einem Anteil von ca. 40 %; diese Ausbeute sollte möglichst hoch sein.
   b. UV-Licht. Dieser Anteil wird durch die erfindungsgemäße Beschichtung zurückgeführt und die dadurch erzielten zusätzlichen Photonen führen zu einer höheren Ausbeute von Lichtwellen im sichtbaren Bereich, wodurch eine Stromeinsparung bei gleicher Lichtausbeute möglich ist.
   c. Einen Infrarot-Anteil, welcher ebenfalls reflektiert werden kann.

Wegen dieser Effekte gestaltet sich praktisch die Brenneroberfläche mit dem erfindungsgemäßen Reflektionsschichtpaket zu einem Bandpaß, der nur die Lichtwellen im sichtbaren Bereich passieren lässt und die Wellenlängen im UV-Bereich oder im UV- und im Infrarot-Bereich ins Brennerinnere reflektiert.

TiO₂ ist normalerweise aufgrund seiner UV-absorbierenden Eigenschaft als UV-Reflektor ungeeignet. SiO₂ zeigt sich dagegen reflektierend und ohne Absorptionsverluste. Wider Erwarten ist im Schichtaufbau TiO₂ mit SiO₂ als verwertbare reflektierende Schicht einsetzbar mit einem Wirkungsgrad um 70 % bei λ= 360 nm. Wichtig ist hierbei die Fehlstellenfreiheit, um eine möglichst geringe Absorption zu erzielen. Die Schichtmaterialien werden bei 350° C amorph in der oxidischen Form abgeschieden.

Durch die erfindungsgemäße Maßnahme ist es wider Erwarten möglich, auf der Basis von an sich bekannten Typen von Wechselschichten TiO₂/SiO₂ mit kleinen Abscheideraten bzw. hohen, vorzugsweise konstanten Abscheidetemperaturen, bei Quarzbrennern für HID-Lampen reflektierende Interferenzsysteme innen und/oder außen mit hohem UV-Wirkungsgrad (Fehlstellenfreiheit) und Inertness gegenüber dem Plasmamedium des Quarzbrenners zu erzielen, die in der Folge zu einer Verbesserung der Energiebilanz dieser Lampentypen führen.

Die DE 199 62 144 A1 zeigt ein UV-reflektierendes Interferenzschichtsystem aus Titan-Oxid/Silizium-Oxid-Wechselschichten für transparente Substrate wie Filter, Brillengläser, aber auch für die Hüllkolben von Entladungslampen, um das ausgestrahlte Licht farbneutral zu erhöhen und gleichzeitig die UV-Schutzwirkung zu erhöhen. Auch ist die Abscheidung mittels chemischer Gasphasenabscheidung, insbesondere plasmaunterstützt, erwähnt.

Im Fall der Erfindung wird jedoch nicht der Hüllkolben der HID-Lampe, sondern der darin angeordnete Brenner selbst beschichtet, wobei wider Erwarten die erfindungsgemäß auf den Brenner aufgebrachten Schichten dem aggressiven Plasmamedium gegenüber inert sind, was eine Innenbeschichtung des Brenners ermöglicht. Auch offenbart diese Schrift nicht das gepulste plasmaunterstützte Gasphasensabscheidungsverfahren, d.h. das PICVD-Verfahren und auch nicht konkret die erfindungsgemäß angewendeten Prozessparameter.

Der Aufsatz von M. Walther et al. "Multilayer barrier coating system produced by plasma-impuls chemical vapor deposition (PICVD)" in "Surface and Coatings Technology 80 (1996) 200 - 202" sowie die DE 44 38 359 C2 beschreiben Verfahren zum Aufbringen von Sperrschichten aus TiO₂/SiO₂- Wechselschichten auf Kunststoffen bei relativ niedrigen Temperaturen. Im Fall der Erfindung wird bei höheren Temperaturen (z.B. 350° C) und auch in Kombination mit kleinen Aufwuchsraten abgeschieden. Nur dadurch ist eine UV-taugliche Fehlstellenfreiheit und Inertness gegenüber dem Plasmamedium herauszubilden. Die aus den vorgenannten Schriften bekannten Schichten erfüllen diese Kriterien nicht.

Die DE 195 30 797 A1 beschreibt ein Kompositmaterial zur Abschirmung von Strahlung in Pflanzenanlagen, umfassend einen transparenten Träger und ein darauf abgeschiedenes Interferenzschichtsystem, u.a. auch aus SiO₂/TiO₂- Wechselschichten. In diesem bekannten Fall werden Aufdampfschichten beschrieben, die wegen ihres Kolumnen-Wachstums für Anwendungen auf Lampenbrennern, insbesondere auf deren Innenseite, völlig ungeeignet sind.

Die DE 44 32 315 A1 beschreibt eine Quecksilberdampf-Kurzbogenlampe mit einem Entladungsgefäß aus Quarzglas, das zur Unterdrückung unerwünschter kurzwelliger UV-Strahlung unterhalb von 365 nm auf der Außenseite mit einem Mehrschicht-Interferenz-Reflexionsfilter aus TiO₂/SiO₂ versehen ist, und auf der Innenseite eine absorbierende Titandioxidschicht aufweist. Im Fall der Erfindung ist jedoch auch die Innenschicht reflektierend ausgebildet. Ferner ist in der vorgenannten Schrift nicht das Abscheiden der Schichten nach dem PICVD-Verfahren mit den erfindungsgemäßen Prozessparametern beschrieben, d.h. die bekannten Schichten wären für die Beschichtung des Brenners einer HID-Lampe ungeeignet.

Die DE 41 15 437 A1 zeigt eine Projektions-Kathodenstrahlröhre mit einem optischen Mehrschichteninterferenzfilter zur Erhöhung des emittierten Lichtstromes. Auch dieses bekannte Schichtsystem wäre für eine Beschichtung des Brenners einer HID-Lampe völlig ungeeignet, da es nicht mit den Maßnahmen nach der Erfindung abgeschieden ist.

Die DE-PS 34 30 727 schließlich zeigt eine Glühlampe mit einem abgedichteten Glaskolben und einem optischen Interferenzfilm auf der inneren und/oder äußeren Oberfläche des Glaskolbens. Das bekannte Schichtsystem ist jedoch lediglich IR-reflektierend; auf eine UV-Tauglichkeit wird nicht hingewiesen. Ferner wäre das bekannte Schichtsystem auch nicht für das Beschichten des Brenners einer HID-Lampe geeignet, weil es nicht mit den erfindungsgemäßen Maßnahmen auf dem Substrat aufgebracht ist.

EP-A-1 158 566 beschreibt einen Leuchtkörper einer Entladungslampe mit einer durch PICVD aufgebrachten IR-reflektierenden Beschichtung. Sie betrifft keinen Quarzbrenner einer HID-Lampe und keine UVreflektirende TiO₂/SiO₂/ - Mehrschicht.

Die DE 38 30 089 A1 beschreibt ein Quarzrohr mit einer durch PICVD aufgebrachten Innenbeschichtung. Sie betrifft keinen Quarzbrenner einer HID-Lampe und keine UV-reflektierende TiO₂/SiO₂ - Mehrschicht.

Vorzugsweise wird ein Verfahren zur Beschichtung vorgesehen, bei dem durch Steuerung der Abscheideparameter des PICVD-Prozesses die Titanoxid- und Siliziumoxid-Schichten in der Stöchiometrie TiO₂ und und SiO₂ abgeschieden werden. Es hat sich gezeigt, dass mit Wechselschichten entsprechend vorgenannter "Ideal-Stöchiometrie" die besten Reflexionsergebnisse erzielt werden.

Eine besonders spannungsarme Beschichtung hinsichtlich intrinsischen Spannungen lässt sich durch ein Verfahren erzielen, bei dem ein Schichtsystem mit einer Dicke von unter 500 nm aufgebracht wird.

Besonders gute Abscheideergebnisse lassen sich mit einem PICVD-Verfahren erzielen, bei dem für die Plasmaerzeugung ein gepulstes Mikrowellenverfahren mit einer Grundfrequenz von 2.45 GHz eingesetzt wird, sowie bei dem das durch den Quarzbrenner gebildetes Substrat auf konstanter Abscheidetemperatur gehalten wird.

Dabei ist auf einfache Weise eine Konstanthaltung der Substrattemperatur durch eine Verfahrensführung möglich, bei der ein O₂-Plasma als Substratheizung gefahren wird und die Temperaturüberwachung optisch durch Vermessung der Substratoberfläche erfolgt.

Da die Reflexionsqualität des Schichtsystems maßgebend von dem PICVD-Verfahren bestimmt wird, ist gemäß einer Weiterbildung der Erfindung eine Verfahrensführung vorgesehen, bei der die Prozeß-Parameter für das PICVD-Verfahren zum Aufbringen der TiO₂/SiO₂-Wechselschichten mit konstanter Substrattemperatur durch eine O₂-Plasmasubstratheizung wie folgt gewählt werden:

| **Parameter** | **Substrat-Heizung, O₂-Plasma** | **Schichten (TiO₂/SiO₂)** |
|---|---|---|
| Prozeßdruck (mbar) | 0,2 | 0,1-0,5 |
| Gesamtmassenfluss (sccm) | 100 | 100-500 |
| Precursor Konzentration | - | 0,1-5% |
| MW-Leistung (%) | 70 | 30-60 |
| Pulsdauer (ms) | 1-2 | 0,1-2,5 |
| Pulspause (ms) | 2-4 | 10-300 |
| Konstante Temperatur (°) | 350 | 350 |

Da die erfindungsgemäßen Schichtsysteme überraschenderweise inert gegen das Plasma im Quarzbrenner sind, ist es mit Vorteil für eine hohe Rate der UV-Photonen Rückgewinnung möglich, den Quarzbrenner auf der Innenseite seiner Umhüllung zu beschichten.

Es ist jedoch auch möglich, den Quarzbrenner auf der Außenseite der Umhüllung zu beschichten, entweder alternativ oder zusätzlich zu der Innenbeschichtung.

Da das Verfahren robust und stabil ist, erfolgt keine On-line Kontrolle des Schichtaufwuchses. Es können konstante Abscheideraten gefahren werden, mit dem Vorteil, dass sich die Schichtdickenmessung auf einen Zählvorgang der Mikrowellen-Pulse reduziert.

Anhand eines in der Zeichnung dargestellten Ausführungsbeispieles wird die Erfindung näher beschrieben.

Es zeigen:
- Fig. 1: in einer schematischen Darstellung den Aufbau einer HID-Lampe mit der erfindungsgemäßen Beschichtung dargestellt in einer Ausschnitt-Vergrößerung, und
- Fig. 2: in einer Blockdarstellung den Aufbau einer modifizierten PICVD- Vorrichtung zum Aufbringen der erfindungsgemäßen Schichten.

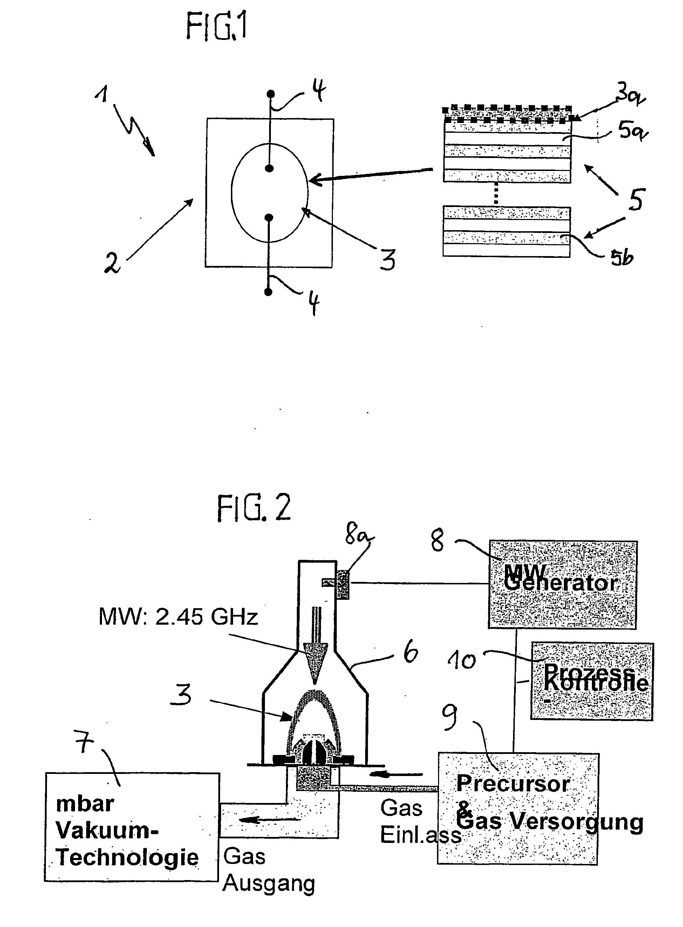

Die in Fig. 1 dargestellte HID-Lampe 1 besteht aus einem Hüllkolben 2 und einem Quarzbrenner 3 mit Elektroden 4. Der Ausdruck HID ist ein englischsprachiger "terminus technicus" und steht für die Abkürzung High Intensity Discharge, frei übersetzt mit Hochleistungs-Gasentladung.

Der konkrete Aufbau sowie die Funktion einer derartigen HID-Lampe 1 ist bekannt und braucht daher hier nicht weiter erläutert werden. Wie die zugehörige Ausschnitt-Vergrößerung zeigt, ist auf der Innenoberfläche der Brennerwand 3a ein UV-reflektierendes Schichtpaket 5 aufgebracht, das aus einer Vielzahl, beispielsweise fünfzig, von einzelnen Wechselschichten aus Ti/Si-Oxid besteht. Die hellen Schichten 5a sollen dabei Ti-Oxid-Schichten und die etwas dunkleren Schichten 5b sollen Si-Oxid-Schichten darstellen. Die Dicke der einzelnen Schichten liegt typischerweise im Bereich zwischen 5 nm und 100 nm, wobei die Dicken nicht unbedingt streng gleich groß verteilt sein müssen, sondern auch Häufungen kleiner Schichtdicken vorkommen können, was designabhängig ist. Bevorzugt ist die Schichtdicke jedoch < 1200 nm, da dann die Schicht eine hohe Flexibilität besitzt und intrinsische Spannungen vermieden werden. Daher werden mit wachsender Einzelschichtenzahl deren Schichtdicken entsprechend kleiner gehalten.

Die Schichten 5a, 5b sind amorphe Si/Ti-Oxid Dünnschichten in der allgemeinen Stöchiometrie TiO₂ und SiO₂, weil dann die besten Reflexionsergebnisse erzielbar sind.

In Fig. 2 ist in einer Blockdarstellung der Aufbau einer Vorrichtung zum Abscheiden des erfindungsgemäßen Schichtsystems auf der Innenseite der Brennerwand 3a dargestellt. Es handelt sich um eine PICVD-Anlage mit einem den Quarzbrenner 3 aufnehmenden Rezipienten 6, in welchem mittels einer Vakuum-Anordnung 7 ein Vakuum aufrechterhalten und mittels eines bei 8a eingekoppelten Mikrowellengenerators 8 ein gepulstes Plasma mit einer Grundfrequenz von 2.45 GHz erzeugt wird.

Aus einer Stufe 9 werden die notwendigen Gase in den Rezipienten 6 eingespeist, nämlich das Gas, in welchem das Plasma gezündet wird, im vorliegenden Fall Sauerstoff, und abwechselnd der jeweilige Precursor,aus dem in Kombination mit dem Sauerstoffplasma die Ti-Oxid- und Si-Oxid-Schichten abwechselnd abgeschieden werden. Die möglichen Precursorgase zum Abscheiden vorgenannter Schichten sind hinlänglich bekannt. Eine Prozesskontrolle 10 steuert den gesamten Verfahrensablauf, insbesondere die Aufwuchsrate der Schichten und deren Dicke. Eine On-line Kontrolle des Schichtaufwuchses ist nicht notwendig, da der Prozeß robust und stabil ist. Es können konstante Abscheideraten erzielt werden, so dass sich die Schichtdickenmessung auf einen Zählvorgang der Mikrowellen-Pulse reduziert. Wesentlich für den Schichtaufbau ist auch das Merkmal, dass die Abscheidung bei erhöhten Substrattemperaturen erfolgt. Im vorliegenden Fall wird der Quarzbrenner 3 auf einfache Weise mittels des Sauerstoffplasmas z.B. auf ca. 350 ° C aufgeheizt, wie z.B. in der DE 40 08 400 C1 (Spalte 8) beschrieben wird. Die Schichtmaterialien des Precursors werden dann bei 350° C amorph in der oxidischen Form abgeschieden. Generell kann die Substrattemperatur zwischen 104° und 400° C liegen.

Typische Prozessparameter sind:

| **Parameter** | **Substrat-Heizung, O₂-Plasma** | **Schichten (TiO₂/SiO₂)** |
|---|---|---|
| Prozeßdruck (mbar) | 0,2 | 0,1-0,5 |
| Gesamtmassenfluss (sccm) | 100 | 100-500 |
| Precursor Konzentration (%) | - | 0,1-5% |
| MW-Leistung (%) | 70 | 30-60 |
| MW-Pulsdauer (ms) | 1-2 | 0,1-2,5 |
| MW-Pulspause (ms) | 2-4 | 10-300 |
| Temperatur (°C) | 350 | 350 |

## Patentansprüche

1. Verfahren zum Beschichten eines Quarzbrenners einer HID-Lampe mit einem UV-reflektierenden Schichtsystem durch alternierendes Aufbringen von amorphen Dünnschichten aus mindestens Titanoxid und Siliziumoxid in der allgemeinen Stöchiometrie TiO_{y} und SiOₓ mittels eines PICVD-Verfahrens mit hoher Leistungsdichte und erhöhten Substrat-Temperaturen im Bereich von 100 - 400° C mit kleinen Aufwuchsraten im Bereich von 1 nm/sec -100 nm/sec zu einem Interferenz-Schichtsystem mit einer Dicke von unter 1200 nm und einer Minimierung des UV-wirksamen Fehlstellenanteiles.

2. Verfahren nach Anspruch 1, bei dem die Titanoxid- und Siliziumoxid-Schichten in der Stöchiometrie TiO₂ und SiO₂ abgeschieden werden mit einem Fehlstellenanteil von 0,1 % bis 1 %.

3. Verfahren nach Anspruch 1 oder 2, bei dem ein Schichtsystem mit einer Dicke von < 1200 nm, bevorzugt < 500 nm aufgebracht wird.

4. Verfahren nach Anspruch 2 oder 3, bei dem ein Schichtsystem aus bevorzugt fünfzig alternierenden Einzelschichten TiO₂ und SiO₂ mit Schichtdicken zwischen 5 nm bis 100 nm aufgebracht wird.

5. Verfahren nach Anspruch 4, bei dem die Schichtdicken der Einzelschichten innerhalb des Schichtsystems unterschiedlich und unterschiedlich verteilt sind.

6. Verfahren nach einem der Ansprüche 1 bis 5, mit einem PICVD-Verfahren, bei dem für die Plasmaerzeugung ein gepulstes Mikrowellenverfahren mit einer Grundfrequenz von 2.45 GHz eingesetzt wird.

7. Verfahren nach Anspruch 6, bei dem das durch den Quarzbrenner gebildete Substrat auf konstanter Abscheidetemperatur gehalten wird.

8. Verfahren nach Anspruch 7, bei dem zur Konstanthaltung der Temperatur ein O₂-Plasma als Substratheizung gefahren wird und die Temperaturüberwachung optisch durch Vermessung der Substratoberfläche erfolgt.

9. Verfahren nach, einem der Ansprüche 2 bis 7, bei dem die Prozeß-Parameter für das PICVD-Verfahren zum Aufbringen der TiO₂/SIO₂-Wechselschichten mit konstanter Substrattemperatur durch eine O₂-Plasmasubstratheizung wie folgt gewählt werden:
| **Parameter** | **Substrat-Heizung, O₂-Plasma** | **Schichten (TiO₂/SiO₂)** |
|---|---|---|
| Prozessdruck (mbar) | 0,2 | 0,1-0,5 |
| Gesamtmassenfluss (sccm) | 100 | 100-500 |
| Precursor Konzentration | - | 0,1-5% |
| MW-Leistung (%) | 70 | 30-60 |
| Pulsdauer (ms) | 1-2 | 0,1-2,5 |
| Pulspause (ms) | 2-4 | 10-300 |
| Konstante Temperatur (°C) | 350 | 350 |

10. Verfahren nach einem der Ansprüche 1 bis 9, bei dem der Quarzbrenner auf der Innenseite seiner Umhüllung beschichtet wird.

11. Verfahren nach einem der Ansprüche 1 bis 10, bei dem der Quarzbrenner auf der Außenseite seiner Umhüllung beschichtet wird.

12. Verfahren nach einem der Ansprüche 5 - 11, bei dem konstante Abscheideraten gefahren werden und die Messung der Schichtdicken durch einen Zählvorgang der Mikrowellen-Pulse erfolgt.

## Claims

1. Process for coating a quartz burner of an HID lamp with a UV-reflective layer system by alternately applying amorphous thin layers made from at least titanium oxide and silicon oxide in the general stoichiometry TiO_{y} and SiOₓ by means of a PICVD process at a high power density and elevated substrate temperatures in the range of 100 - 400°C at low growth rates in the range of 1 nm/sec - 100 nm/sec so as to form an interference layer system having a thickness of less than 1200 nm and a minimized UV-active defect rate.

2. Process according to Claim 1, in which the titanium oxide layers and silicon oxide layers are deposited in the stoichiometry TiO₂ and SiO₂ with a defect rate of 0.1% to 1%.

3. Process according to Claim 1 or 2, in which a layer system having a thickness of < 1200 nm, preferably < 500 nm, is applied.

4. Process according to Claim 2 or 3, in which a layer system made from preferably fifty alternating individual TiO₂ and SiO₂ layers having layer thicknesses of between 5 nm and 100 nm is applied.

5. Process according to Claim 4, in which the layer thicknesses of the individual layers within the layer system are different and distributed differently.

6. Process according to one of Claims 1 to 5, comprising a PICVD process, in which the plasma is generated by using a pulsed microwave process at a fundamental frequency of 2.45 GHz.

7. Process according to Claim 6, in which the substrate formed by the quartz burner is kept at a constant deposition temperature.

8. Process according to Claim 7, in which the temperature is kept constant by operating an O₂ plasma as the substrate heater and the temperature is monitored visually by surveying the substrate surface.

9. Process according to one of Claims 2 to 7, in which the following process parameters are selected for the PICVD process for applying the alternating TiO₂/SiO₂ layers at a constant substrate temperature by means of an O₂ plasma substrate heater:
| **Parameter** | **Substrate heater, O₂ plasma** | **Layers (TiO₂/SiO₂)** |
|---|---|---|
| Process pressure (mbar) | 0.2 | 0.1-0.5 |
| Total mass flow (sccm) | 100 | 100 - 500 |
| Precursor concentration | - | 0.1 - 5% |
| MW power (%) | 70 | 30-60 |
| Pulse duration (ms) | 1 - 2 | 0.1 - 2.5 |
| Interpulse period (ms) | 2 - 4 | 10 - 300 |
| Constant temperature (°C) | 350 | 350 |

10. Process according to one of Claims 1 to 9, in which the quartz burner is coated on the inside of its envelope.

11. Process according to one of Claims 1 to 10, in which the quartz burner is coated on the outside of its envelope.

12. Process according to one of Claims 5 - 11, in which constant deposition rates are employed and the layer thicknesses are measured by counting the microwave pulses.

## Revendications

1. Procédé destiné à revêtir un brûleur à quartz d'une lampe à décharge haute pression avec un système de couches réfléchissant les UV, en appliquant en alternance des couches minces amorphes au moins d'oxyde de titane et d'oxyde de silicium selon la stoechiométrie générale TiO_{y} et SiOₓ au moyen d'un procédé de dépôt chimique en phase vapeur par plasma pulsé, ce dernier procédé étant réalisé avec une haute puissance volumique et des températures de substrat élevées, à savoir comprises entre 100 et 400 °C, les taux de dépôt étant faibles, à savoir compris entre 1 nm/sec et 100 nm/sec, pour ainsi réaliser un système de couches à interférence présentant une épaisseur inférieure à 1200 nm et minimisant la proportion des défauts ayant une incidence sur les UVs.

2. Procédé selon la revendication 1, les couches d'oxyde de titane et d'oxyde de silicium étant déposées selon la stoechiométrie TiO₂ et SiO₂, avec une proportion de défauts comprise entre 0,1 % et 1 %.

3. Procédé selon les revendications 1 ou 2 dans lequel un système de couches est appliqué tel que son épaisseur est < 1200 nm, de préférence < 500 nm.

4. Procédé selon les revendication 2 ou 3 dans lequel un système de couches est appliqué tel qu'il est composé de préférence de cinquante couches simples de TiO₂ et de SiO₂ disposées en alternance et présentant des épaisseurs de couche comprises entre 5 nm et 100 nm.

5. Procédé selon la revendication 4 dans lequel les épaisseurs de couche des couches simples au sein du système de couches sont différentes et présentent une répartition irrégulière.

6. Procédé selon l'une des revendications 1 à 5, avec un procédé de dépôt chimique en phase vapeur par plasma pulsé dans lequel un procédé à base de micro-ondes pulsées avec une fréquence de base de 2,45 GHz est utilisé pour générer le plasma.

7. Procédé selon la revendication 6 dans lequel le substrat formé par le brûleur à quartz est maintenu à une température de dépôt constante.

8. Procédé selon la revendication 7 dans lequel le substrat est chauffé au moyen d'un plasma O₂ afin de maintenir la température constante et la température est contrôlée en soumettant la surface du substrat à des mesures optiques.

9. Procédé selon l'une des revendications 2 à 7 dans lequel, pour le procédé de dépôt chimique en phase vapeur par plasma pulsé destiné à appliquer les couches alternatives de TiO₂/SiO₂ avec une température de substrat constante réalisée en chauffant le substrat par un plasma O₂, les paramètres de processus sont choisis comme suit :
| **Paramètre** | **Chauffage du substrat, plasma O₂** | **Couches (TiO₂/SiO₂)** |
|---|---|---|
| Pression de processus (mbar) | 0,2 | 0,1 à 0,5 |
| Flux massique total (sccm) | 100 | 100 à 500 |
| Concentration de précurseur | - | 0,1 à 5 % |
| Puissance micro-ondes (%) | 70 | 30 à 60 |
| Durée d'impulsion (ms) | 1 à 2 | 0,1 à 2,5 |
| Pause d'impulsion (ms) | 2 à 4 | 10 à 300 |
| Température constante (°C) | 350 | 350 |

10. Procédé selon l'une des revendications 1 à 9 dans lequel le brûleur à quartz est revêtu sur la face intérieure de sa gaine.

11. Procédé selon l'une des revendications 1 à 10 dans lequel le brûleur à quartz est revêtu sur la face extérieure de sa gaine.

12. Procédé selon l'une des revendications 5 à 11 dans lequel les taux de dépôt sont constants et la mesure des épaisseurs de couche est réalisée au moyen d'un processus de comptage des impulsions de micro-ondes.
